# EUROPEAN PATENT APPLICATION

(11) **EP 4 796 496 A1**
(43) Date of publication of application: **26.08.2026**
(21) Application number: 24893601.5
(22) Date of filing: 22.11.2024
(51) Int. Cl.: C01B 25/37, C01B 25/45, H01M 4/58, H01M 10/0525

(54) **ANHYDROUS IRON PHOSPHATE AND PREPARATION METHOD THEREFOR**

(30) Priority: 23.11.2023 CN 202311575348
(71) Applicant: Guizhou CNGR Xingyang Energy Storage Technology Co., Ltd., Guiyang, Guizhou 550300 (CN); Hunan CNGR New Energy Science & Technology Co., Ltd., Ningxiang Changsha, Hunan 410600 (CN)
(72) Inventor: YE, Chao, Guiyang, Guizhou 550300 (CN); LIU, Sen, Guiyang, Guizhou 550300 (CN); GUO, Chuanyi, Guiyang, Guizhou 550300 (CN); LI, Shoukui, Guiyang, Guizhou 550300 (CN); WU, Xingke, Guiyang, Guizhou 550300 (CN); YIN, Shuo, Guiyang, Guizhou 550300 (CN)
(74) Representative: Loyer & Abello
(86) International application number: PCT/CN2024/133911
(87) International publication number: WO 2025/108448

(57) **Abstract**

The present disclosure relates to the technical field of batteries. Disclosed are an anhydrous iron phosphate and a preparation method therefor. The anhydrous iron phosphate provided in the present disclosure comprises secondary particles formed by aggregation of a plurality of primary nanoparticles, wherein the average particle size of the primary particles forming the secondary particles is 100 - 150 nm, and the particle size variance Q is less than or equal to 1000 nm². The primary particles provided in the present disclosure have a small particle size and good consistency, thereby improving the grinding efficiency of the anhydrous iron phosphate. Lithium iron phosphate prepared by using the anhydrous iron phosphate as a precursor has a pore structure, thereby increasing the area of contact between an electrolyte and a positive electrode material, and realizing good wettability.

## Description

### CROSS REFERENCE TO RELATED APPLICATION

The present invention claims priority to Chinese Patent Application No. 2023115753489, filed with the China National Intellectual Property Administration on November 23, 2023, and entitled "ANHYDROUS IRON PHOSPHATE AND PREPARATION METHOD THEREFOR", which is incorporated herein by reference in entirety.

### TECHNICAL FIELD

The present invention relates to the technical field of batteries, and specifically related to an anhydrous iron phosphate and a preparation method therefor.

### BACKGROUND ART

Lithium iron phosphate is one of the most competitive positive electrode active materials for lithium-ion batteries currently on the market. Compared with lithium cobalt oxide and ternary positive electrode materials, lithium iron phosphate has a longer service life and better safety performance. In addition, lithium iron phosphate has a theoretical specific capacity of 170 mAh·g⁻¹ and a plateau discharge voltage of 3.4 V, thus possessing considerable energy density. Currently, most preparation processes for lithium iron phosphate use a solid-state method of sintering anhydrous iron phosphate with lithium salts. Anhydrous iron phosphate needs to be ground before sintering, and grinding efficiency is related to the state of the anhydrous iron phosphate powders. Improving grinding efficiency can save energy and increase production capacity.

In view of this, the present invention provides an anhydrous iron phosphate that is easy to grind and can improve grinding efficiency.

### SUMMARY

An objective of the present invention is to overcome the above deficiencies in the prior art by providing an anhydrous iron phosphate and a preparation method therefor.

The present invention solves a technical problem by employing the following technical solutions.

The present invention provides an anhydrous iron phosphate, wherein the anhydrous iron phosphate includes secondary particles formed by aggregation of a plurality of primary nanoparticles, and an average particle size of the primary particles forming the secondary particles is 100 - 150 nm, and a particle size variance Q is less than or equal to 1000 nm².

The present invention further provides a preparation method for the anhydrous iron phosphate, including: mixing an amorphous iron phosphate solution with phosphoric acid and an ammonium salt to obtain a mixed material, heating the mixed material, then allowing it to stand while maintaining the temperature, followed by washing, drying, and calcining to obtain a product of anhydrous iron phosphate.

The present invention further provides a lithium iron phosphate positive electrode material, wherein the lithium iron phosphate positive electrode material is prepared by a raw material containing the anhydrous iron phosphate, and the anhydrous iron phosphate is the anhydrous iron phosphate obtained according to the above preparation method.

The present invention further provides a lithium-ion battery, wherein the lithium-ion battery includes the positive electrode prepared by the above lithium iron phosphate positive electrode material, a negative electrode, a separator, and an electrolyte.

The present invention has the following beneficial effects.

The present invention provides an anhydrous iron phosphate and a preparation method therefor, wherein the provided anhydrous iron phosphate includes secondary particles formed by aggregation of a plurality of primary nanoparticles, the average particle size of the primary particles forming the secondary particles is 100 - 150 nm, and the particle size variance Q is less than or equal to 1000 nm². The above anhydrous iron phosphate is characterized by primary particles having a small particle size and high consistency. Grinding the anhydrous iron phosphate with the above characteristics results in high grinding efficiency, energy savings, increased production capacity and reduced costs, making it more suitable for use in preparation of lithium iron phosphate.

### BRIEF DESCRIPTION OF DRAWINGS

To more clearly illustrate the technical solutions of the present invention, drawings that need to be used in the embodiments will be briefly introduced below. It should be understood that the drawings described below only illustrate some embodiments of the present invention and should not be regarded as a limitation on the scope. For those ordinarily skilled in the art, other relevant drawings can be obtained based on these drawings without making any inventive efforts.
FIG. 1 is a SEM image of an anhydrous iron phosphate prepared in Example 1 of the present invention;
FIG. 2 is a cross-section SEM image of an anhydrous iron phosphate prepared in Example 1 of the present invention (scale bar: 5 µm);
FIG. 3 is a SEM image of an anhydrous iron phosphate prepared in Example 2 of the present invention;
FIG. 4 is a SEM image of an anhydrous iron phosphate prepared in Example 3 of the present invention;
FIG. 5 is a SEM image of an anhydrous iron phosphate prepared in Comparative Example 1 of the present invention;
FIG. 6 is a cross-section SEM image of the anhydrous iron phosphate prepared in Comparative Example 1 of the present invention (scale bar: 5 µm);
FIG. 7 is a SEM image of an anhydrous iron phosphate prepared in Comparative Example 2 of the present invention;
FIG. 8 is a SEM image of an anhydrous iron phosphate prepared in Comparative Example 3 of the present invention;
FIG. 9 is a SEM image of an anhydrous iron phosphate prepared in Comparative Example 4 of the present invention; and
FIG. 10 is a SEM image of an anhydrous iron phosphate prepared in Comparative Example 5 of the present invention.

### DETAILED DESCRIPTION OF EMBODIMENTS

To make objectives, technical solutions, and advantages of the present invention clearer, the technical solutions of the present invention will be clearly and completely described below. For the examples where specific conditions are not indicated, conventional conditions or conditions recommended by the manufacturer shall be followed. Reagents or instruments used where the manufacturers are not indicated, are all conventional commercial products available for purchase.

The following is a detailed description of an anhydrous iron phosphate and a preparation method therefor provided by the present invention.

In the first aspect, the present invention provides an anhydrous iron phosphate, wherein the anhydrous iron phosphate includes secondary particles formed by aggregation of a plurality of primary nanoparticles, an average particle size of the primary particles forming the secondary particles is 100 - 150 nm, and a particle size variance Q is less than or equal to 1000 nm².

In an optional embodiment, an average particle size of the primary particles forming the secondary particles is 110 - 130 nm, and/or, a particle size variance Q is less than or equal to 300 nm².

In an optional embodiment, an overall porosity of a cross-section of the secondary particles is 10% - 30%, and a porosity uniformity coefficient R of the cross-section is less than or equal to 5 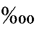 .

In an optional embodiment, the overall porosity of the cross-section of the secondary particles is 20% - 30%, and/or, the porosity uniformity coefficient R of the cross-section is less than or equal to 2 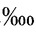 .

The following is description of test methods and test results for the particle size and the particle size variance of the primary particles, as well as the overall porosity of a cross-section and the porosity uniformity coefficient of the cross-section of the secondary particles of the anhydrous iron phosphate provided by the present invention.
(1) test method for the particle size of the primary particles: primary particles with clear boundary areas are selected from SEM images with the same magnification (above × 10000) and the same resolution (above 1280 × 9180) for particle size measurement. n primary particles are randomly selected from each SEM image for particle size measurement. An average value of 3n primary particles (3n ≥ 50, preferably 50 - 200) from the three SEM images is taken as a mean particle size of the primary particles, also known as an average particle size of the primary particles. A calculation formula is as follows:
   $q = \left({q}_{1}+{q}_{2}+……+{q}_{3 n}\right) / 3 n$

q: mean particle size of 3n primary particles, unit nm, 3n ≥ 50, in an optional embodiment, 3n is 50 - 200. q₁...q₃ₙ represent the particle sizes of 3n randomly selected primary particles.

Test results of the particle size of the primary particles of the anhydrous iron phosphate obtained in the present invention are: the anhydrous iron phosphate includes secondary particles formed by aggregation of a plurality of primary nanoparticles, wherein the average particle size of the primary particles forming the secondary particles is 100 - 150 nm. In an optional embodiment, the average particle size of the primary particles forming the secondary particles is 110 - 130 nm.

Optionally, the average particle size of the primary particles forming the secondary particles can be 100 nm, 105 nm, 110 nm, 115 nm, 120 nm, 127 nm, 130 nm, 132 nm, 140 nm, 145 nm, 150 nm, or any value between 100 - 150 nm.

It is worth noting that because the average particle size of the primary particles is at a nanometer level, in the present invention, the primary particles are also referred to as primary nanoparticles.

(2) test method for consistency of the primary particle: consistency of the primary particles is evaluated by using the particle size variance. A variance calculation is performed on the particle sizes and the mean value of 3n primary particles to obtain the particle size variance Q of the primary particles, and a calculation formula is as follows:
$Q = \left({\left|q-{q}_{1}\right|}^{2}+{\left|q-{q}_{2}\right|}^{2}+……+{\left|q-{q}_{3 n}\right|}^{2}\right) / 3 n$

Units of q₁...q₃ₙ and q are nm. According to the above formula, a unit of Q is nm².

The particle size variance Q of the primary particles in the anhydrous iron phosphate prepared in the present invention is less than or equal to 1000 nm²; in an optional embodiment, the particle size variance Q of the primary particles in the anhydrous iron phosphate is less than or equal to 300 nm²; and in an optional embodiment, the particle size variance Q of the primary particles in the anhydrous iron phosphate is less than or equal to 150 nm². The results show that: when Q ≤ 1000 nm², the primary particles have good consistency; and when Q > 1000 nm², the primary particles have poor consistency.

Optionally, the particle size variance of the primary particles forming the secondary particles can be 1000 nm², 950 nm², 900 nm², 800 nm², 700 nm², 600 nm², 500 nm², 400 nm², 300 nm², 200 nm², 150 nm², 100 nm², 50 nm², or any value less than or equal to 1000 nm².

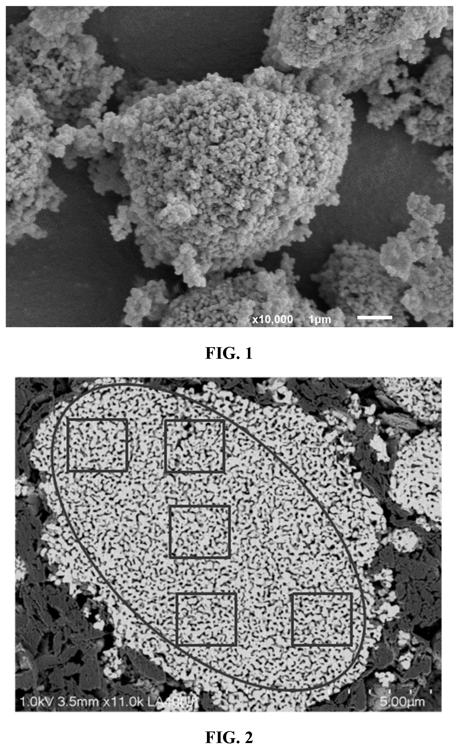

(3) test method for the overall porosity of a cross-section: the cross-sectional area of the secondary particles accounting for more than 80% of the total cross-sectional area is selected as a total cross-sectional area. A porosity of the total cross-sectional area is measured as a porosity of the cross-section, also referred to as the overall porosity of the cross-section in the present invention. The selection of the total cross-sectional area is shown in FIG. 2. Irregular shapes or regular shapes are drawn inside the secondary particles along boundaries of the secondary particles, wherein the area of the irregular shapes or regular shapes accounts for more than 80% of the cross-sectional area of the secondary particles.

To improve the accuracy of the overall porosity of the cross-section measurement, the porosity is typically measured on cross-sections of a plurality of secondary particles, and the average value of these porosities is used as the overall porosity of the cross-section of the secondary particles. Optionally, number of secondary particles for measuring overall porosity of the cross-section is 3, 4, 5, or any integer greater than 3.

Test result of the overall porosity of the cross-section of the secondary particles of the anhydrous iron phosphate obtained in the present invention is 10% - 30%; in an optional embodiment, the overall porosity of the cross-section of the secondary particles of the anhydrous iron phosphate is 20% - 30%; and in an optional embodiment, the overall porosity of the cross-section of the secondary particles of the anhydrous iron phosphate is 24% - 26%.

Optionally, the overall porosity of the cross-section of the secondary particles of the anhydrous iron phosphate is 10%, 12%, 15%, 18%, 20%, 24%, 26%, 27%, 28%, 30%, or any value between 10% - 30%.

(4), test method for the porosity uniformity coefficient of the cross-section: local regions with equal cross-sectional areas in the upper left, upper right, middle, lower left, and lower right are selected. The location and area of the local regions shown in FIG. 2 are one selection method in following embodiment. The areas of the local regions account for 10% of the total cross-sectional area; and areas and pore areas of the local regions are measured, porosities of the local regions are calculated, and then porosity uniformity of the cross-section is evaluated using following formula:
$R = \left({\left|r-{r}_{1}\right|}^{2}+{\left|r-{r}_{2}\right|}^{2}+{\left|r-{r}_{3}\right|}^{2}+{\left|r-{r}_{4}\right|}^{2}+{\left|r-{r}_{5}\right|}^{2}\right) / 5$
r: overall porosity of the cross-section of the secondary particles; r₁, r₂, r₃, r₄, and r₅ are the porosities of the local regions (upper left, upper right, middle, lower left, and lower right) on the cross-section, respectively; and R is the variance of the porosity of the cross-section, used to evaluate the porosity uniformity of the cross-section, also known as the porosity uniformity coefficient of the cross-section.

To improve accuracy of the porosity uniformity coefficient of the cross-section measurement, variances of the overall porosity of a cross-section and the porosity of the local regions of a plurality of secondary particles are calculated, respectively; an average value of a plurality of variances is obtained, and the average value is used as the porosity uniformity coefficient R of the cross-section of the secondary particles.

In addition, R can be measured using another method: average values of the overall porosity, porosity of the upper left local region, porosity of the upper right local region, porosity of the middle local region, porosity of the lower left local region, and porosity of the lower right local region of a plurality of secondary particles are calculated, respectively, to obtain r, r₁, r₂, r₃, r₄, and r₅ (average porosity of (the overall of the cross-section, the upper left local region, the upper right local region, the middle local region, the lower left local region, and the lower right local region)). The porosity uniformity coefficient R of the cross-section is then calculated using the above variance formula.

Optionally, number of the secondary particles for measuring overall porosity and the porosity of local regions of the cross-section is 3, 4, 5, or any integer greater than 3.

Test result of the porosity uniformity coefficient of the cross-section of the secondary particles of the anhydrous iron phosphate obtained in the present invention is: R ≤ 5 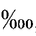 ; in an optional embodiment, the porosity uniformity coefficient R of the cross-section of the secondary particles of the anhydrous iron phosphate is less than or equal to 2 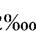 ; and in an optional embodiment, the porosity uniformity coefficient R of the cross-section of the secondary particles of the anhydrous iron phosphate is less than or equal to 0.5 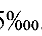 . When R ≤ 5 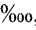 , the porosity distribution uniformity is good; and when R > 5 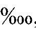 , the porosity distribution uniformity is poor.

Optionally, the porosity uniformity coefficient R of the cross-section of the secondary particles of the anhydrous iron phosphate can be 5 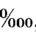 , 4.5 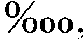 , 4 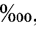 , 3.5 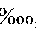 , 3 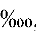 , 2.5 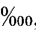 , 2 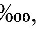 , 1.5 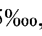 , 1 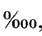 , 0.5 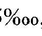 , 0.3 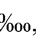 , 0.1 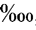 , or any value less than or equal to 5 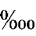 .

The anhydrous iron phosphate prepared obtained based on the present invention has the characteristics of the primary particles having small particle size and good consistency and the secondary particles having high porosity uniformity, and these characteristics improve the grinding efficiency of the anhydrous iron phosphate.

The technical principle is as follows: the particle size of the primary particles of the anhydrous iron phosphate is small, which is beneficial for grinding. When the primary particles of the anhydrous iron phosphate have a small particle size and good consistency, grinding efficiency thereof is improved.

If the overall porosity of a cross-section is too low, the primary particles in the secondary particles grow more densely, resulting in low grinding efficiency; and if the overall porosity of a cross-section is too high, the tap density of the anhydrous iron phosphate is low. The smaller the porosity uniformity coefficient of the cross-section is, the more uniform the pore distribution within the secondary particles is, the larger the porosity uniformity coefficient of the cross-section is, the more ununiform the pore distribution within the secondary particles is, and the anhydrous iron phosphate with uneven pore distribution results in reduced grinding efficiency. While ensuring a certain tap density, improving the porosity and pore distribution uniformity can improve the grinding efficiency.

Grinding results are as follows: the anhydrous iron phosphate is ground to a D50 of 380 nm in only 80 min, resulting in a shorter grinding time and a doubling grinding efficiency; and under the same grinding time, the anhydrous iron phosphate had a smaller D50 and a narrower span value.

In an optional embodiment, the anhydrous iron phosphate satisfies one or more of following conditions A to C:
A. a molar ratio of Fe/P in the anhydrous iron phosphate is 0.96 - 0.98;
B. a specific surface area BET of the anhydrous iron phosphate is 10 - 14 m²/g; and
C. a tap density TD of the anhydrous iron phosphate is 0.6 - 0.8 g/cm³.

Optionally, the molar ratio of Fe/P of the anhydrous iron phosphate can be 0.96, 0.963, 0.965, 0.968, 0.98, or any value between 0.96 - 0.98; the specific surface area BET can be 10 m²/g, 11 m²/g, 12 m²/g, 13 m²/g, 14 m²/g, or any value between 10 - 14 m²/g; and the tap density TD can be 0.6 g/cm³, 0.65 g/cm³, 0.7 g/cm³, 0.75 g/cm³, 0.8 g/cm³, or any value between 0.6 - 0.8 g/cm³.

When the molar ratio of Fe/P of the anhydrous iron phosphate is in a range of 0.96 - 0.98, the positive electrode material prepared by iron phosphate exhibits excellent specific capacity; when the molar ratio of Fe/P is below 0.96, the positive electrode material prepared by iron phosphate has a lower specific capacity.

If the specific surface area BET of the anhydrous iron phosphate is too low, it is not conducive to lithium salt intercalation during a preparation process of the positive electrode material; if the specific surface area BET of the anhydrous iron phosphate is too high, the anhydrous iron phosphate is relatively loose overall, which is not conducive to the preparation of anhydrous iron phosphate with a high tap density.

If the tapped density TD of the anhydrous iron phosphate is too low, the anhydrous iron phosphate is relatively loose, which is not conducive to improving the compaction density of the positive electrode material; if the tapped density TD is too high, the anhydrous iron phosphate is relatively dense, which is not conducive to grinding.

In the present invention, BET is measured using the nitrogen adsorption method, and the test method is performed in accordance with the national standard (GB/T 13390-2008), and the test method for TD is performed in accordance with the national standard (GB/T 5162-2021).

In the second aspect, the present invention further provides a preparation method for an anhydrous iron phosphate, including: mixing an amorphous iron phosphate solution with phosphoric acid and an ammonium salt to obtain a mixed material; heating the mixed material, then allowing it to stand while maintaining the temperature; followed by washing, drying, and calcining to obtain a product of anhydrous iron phosphate.

In the above preparation process of the anhydrous iron phosphate, the amorphous iron phosphate is converted into crystalline iron phosphate through crystal transformation. The crystalline iron phosphate is then washed and dehydrated to obtain the anhydrous iron phosphate. Specifically, under heating conditions, the amorphous iron phosphate solution is converted into crystalline iron phosphate under acidic conditions. During a process of crystal transformation, ammonium ions can effectively prevent the aggregation of iron phosphate particles. After holding the temperature and standing, the crystalline iron phosphate is then washed to remove impurities and dehydrated to obtain the anhydrous iron phosphate with a narrow particle size distribution of the primary particles.

In an optional embodiment, amount of phosphoric acid in the mixed material is 10% - 20% of a molar amount of iron, and amount of ammonium salt is 80% - 120% of the molar amount of iron.

Optionally, the amount of phosphoric acid in the mixed material can be 10%, 11%, 12%, 13%, 14%, 15%, 16%, 17%, 18%, 19%, 20%, or any value between 10% - 20% of the molar amount of iron. The amount of ammonium salt can be 80%, 85%, 90%, 95%, 100%, 105%, 110%, 115%, 120% or any value between 80% - 120% of the molar amount of iron.

The preparation method for the anhydrous iron phosphate provided by the present invention involves adding phosphoric acid and ammonium salt to an amorphous iron phosphate slurry. Appropriate amounts of phosphoric acid and ammonium salt can promote crystal transformation of the amorphous iron phosphate and control crystal type and particle size after transformation, resulting in the prepared anhydrous iron phosphate having characteristics of the primary particles having good uniformity and narrow particle size distribution and the secondary particles having high pore uniformity. However, if the content of phosphoric acid is not in the range of 10% - 20% or the content of ammonium salt is not in the range of 80% - 120%, the primary particles of the obtained anhydrous iron phosphate will have a larger particle size and inferior uniformity.

In an optional embodiment, the preparation method includes following steps:
a phosphate solution containing hydrogen peroxide is added dropwise to a ferrous salt solution to obtain an amorphous iron phosphate slurry; then the amorphous iron phosphate slurry is subjected to a first pressure filtration and rinsing to obtain a first-rinsed material;
water is added to the first-rinsed material to form a slurry, and phosphoric acid and ammonium salt are added to obtain the mixed material; then the mixed material is heated and held for standing, followed by being subjected to a second pressure filtration and rinsing to obtain a second-rinsed material; and
the second-washed material is dried and calcined to obtain anhydrous iron phosphate.

In an optional embodiment, the ammonium salt includes one or more selected from the group consisting of ammonium sulfate, ammonium phosphate, ammonium dihydrogen phosphate, and diammonium hydrogen phosphate. Generally, a sulfuric acid solution is further added to other ammonium salts in addition to ammonium sulfate.

In an optional embodiment, a duration of holding the temperature is 10 - 150 min. It is worth noting that after the mixed material is stirred uniformly and heated to 95 - 100 °C, a color change phenomenon is usually observed. After the solution changes color, holding it for a period of time, iron phosphate with higher crystallinity can be formed.

Optionally, after the mixed material is stirred uniformly, a temperature of the heating can be 95 °C, 96 °C, 97 °C, 98 °C, 99 °C, 100 °C, or any value between 95 - 100 °C. A duration of holding the temperature can be 10 min, 20 min, 30 min, 40 min, 50 min, 60 min, 70 min, 80 min, 90 min, 100 min, 110 min, 120 min, 130 min, 140 min, 150 min, or any value between 10 - 150 min.

In an optional embodiment, the second-rinsed material is dried at 100 - 200 °C and then calcined at 550 - 800 °C for 4 - 8 h to obtain the anhydrous iron phosphate.

Optionally, a temperature of drying the second-rinsed material can be 100 °C, 105 °C, 110 °C, 120 °C, 130 °C, 140 °C, 150 °C, 160 °C, 170 °C, 180 °C, 190 °C, 200 °C or any value between 100 - 200 °C, a temperature of the calcination can be 550 °C, 600 °C, 650 °C, 700 °C, 750 °C, 800 °C or any value between 550 - 800 °C, and a duration of the calcination can be 4 h, 5 h, 6 h, 7 h, 8 h or any value between 4 h - 8 h.

In an optional embodiment of the present invention, a preparation method for the amorphous iron phosphate slurry includes the following steps: a ferrous salt solution is added to a reactor, then a phosphate solution and hydrogen peroxide are added dropwise simultaneously, and aging is continued after the completion of the dropwise addition to obtain the amorphous iron phosphate slurry.

In an optional embodiment, a preparation method for the ferrous salt solution includes the following steps: ferrous sulfate, a byproduct of titanium dioxide, is dissolved in water, the resultant is heated to 60 - 80 °C, then alkali is added to adjust the pH to 4.0 - 5.5, impurities and precipitates are removed by filtration, the filtrate is collected and is diluted with water to obtain a ferrous salt solution with a concentration of 30 - 80 g/L.

Optionally, a preparation process for the ferrous salt solution, a temperature of the heating can be 60 °C, 65 °C, 70 °C, 75 °C, 80 °C, or any value between 60 - 80 °C; the pH value of adding alkali to adjust can be 4.0, 4.3, 4.5, 4.8, 5.0, 5.3, 5.5, or any value between 4.0 - 5.5; and a concentration of the ferrous salt solution can be 30 g/L, 40 g/L, 50 g/L, 60 g/L, 70 g/L, 80 g/L, or any value between 30 - 80 g/L.

In an optional embodiment, a preparation method for the phosphate solution includes the following steps: phosphate is dissolved in water, an alkali is added to adjust the pH to 6.0 - 8.0, and then the resultant is diluted with water at a temperature of 30 - 50 °C to a phosphate radical concentration of 60 - 100 g/L to obtain the phosphate solution.

Optionally, during a preparation process of the phosphate preparation, the pH value adjusted by adding alkali can be 6.0, 6.5, 6.7, 7.0, 7.3, 7.5, 7.8, 8.0, or any value between 6.0 - 8.0; the temperature of the heating can be 30 °C, 35 °C, 40 °C, 45 °C, 50 °C, or any value between 30 - 50 °C; and a concentration of phosphate radical can be 60 g/L, 70 g/L, 80 g/L, 90 g/L, 100 g/L, or any value between 60 - 100 g/L.

For the preparation method for the anhydrous ferric phosphate provided by the present invention, the amorphous iron phosphate slurry is prepared by adding a phosphate solution containing hydrogen peroxide dropwise to a ferrous salt solution for reaction, wherein a raw material of the ferrous salt is ferrous sulfate, a byproduct of titanium dioxide. Since the byproduct of titanium dioxide contains impurities such as titanium and aluminum, dissolving the byproduct of titanium dioxide in water and adjusting the pH allows the impurities, such as titanium and aluminum, to precipitate. After filtration, a pure ferrous salt solution is obtained. In preparing the phosphate solution, after the phosphate is dissolved in water, an alkali is added to adjust the pH to obtain the phosphate solution, wherein the alkali in the phosphate solution is conducive to the combination of iron ions and phosphate radicals in the later stage, thereby obtaining pure amorphous iron phosphate with a high ratio of iron to phosphorus.

In the third aspect, the present invention further provides a lithium iron phosphate positive electrode material, wherein the lithium iron phosphate positive electrode material is prepared from a raw material containing an anhydrous iron phosphate, and the anhydrous iron phosphate is the anhydrous iron phosphate obtained according to the above preparation method.

In the fourth aspect, the present invention further provides a lithium-ion battery, wherein the lithium-ion battery includes a positive electrode prepared by the above lithium iron phosphate positive electrode material, a negative electrode, a separator, and an electrolyte.

As can be seen from the above, the anhydrous iron phosphate prepared in the present invention offers the advantages of the primary particles with small particle size and good consistency, as well as the secondary particles with uniform pore distribution. Sintering the above anhydrous iron phosphate with lithium salt facilitates the entry of lithium ions, resulting in an improved lithiation effect for lithium iron phosphate. Lithium iron phosphate prepared by using the anhydrous iron phosphate as a precursor exhibits a pore structure, thereby increasing the area of contact between the electrolyte and the positive electrode material, thus realizing good wettability. Good electrolyte wetting enables the full exertion of the performance of lithium-ion batteries and improves the performance of lithium-ion batteries.

The features and performances exhibited by the present invention are further described in detail below in combination with examples.

### Example 1

The present example provided a preparation method for an anhydrous iron phosphate.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 15% of the molar amount of iron and ammonium sulfate at 100% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate, as shown in FIG. 1 and FIG. 2.

### Example 2

The present example provided a preparation method for an anhydrous iron phosphate. Unlike Example 1, in the aging process of Example 2, addition amounts of phosphoric acid and ammonium sulfate were different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 20% of the molar amount of iron and ammonium sulfate at 120% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Example 3

The present example provided a preparation method for an anhydrous iron phosphate. Unlike Example 1, in the aging process of Example 3, the addition amounts of phosphoric acid and ammonium sulfate were different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 10% of the molar amount of iron and ammonium sulfate at 80% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Example 4

The present example provided a preparation method for an anhydrous iron phosphate. Unlike Example 1, in the aging process (Step 7) of Example 4, the addition amounts of phosphoric acid and ammonium sulfate were different.
Step 7, the first rinsed material was slurried with water in an aging reactor, and phosphoric acid at 20% of the molar amount of iron and ammonium sulfate at 80% of the molar amount of iron were added;
Step 8, the material in the aging reactor was stirred evenly and then heated to 95 - 100 °C, held for 90 min after color changes, followed by pressure filtration and rinsing to obtain a second-rinsed material; and
Step 9, the second-rinsed material was dried at 110 °C to obtain iron phosphate dihydrate, then the iron phosphate dihydrate was subjected to calcination at 660 °C for 4 h to obtain the anhydrous iron phosphate.

### Example 5

The present example provided a preparation method for an anhydrous iron phosphate. Unlike Example 1, in the aging process (Step 7) of Example 5, the addition amounts of phosphoric acid and ammonium sulfate were different.
Step 7, the first rinsed material was slurried with water in an aging reactor, and phosphoric acid at 10% of the molar amount of iron and ammonium sulfate at 120% of the molar amount of iron were added;
Step 8, the material in the aging reactor was stirred evenly and then heated to 95 - 100 °C, held for 90 min after color changes, followed by pressure filtration and rinsing to obtain a second-rinsed material; and
Step 9, the second-rinsed material was dried at 110 °C to obtain iron phosphate dihydrate, then the iron phosphate dihydrate was subjected to calcination at 660 °C for 4 h to obtain the anhydrous iron phosphate.

### Comparative Example 1

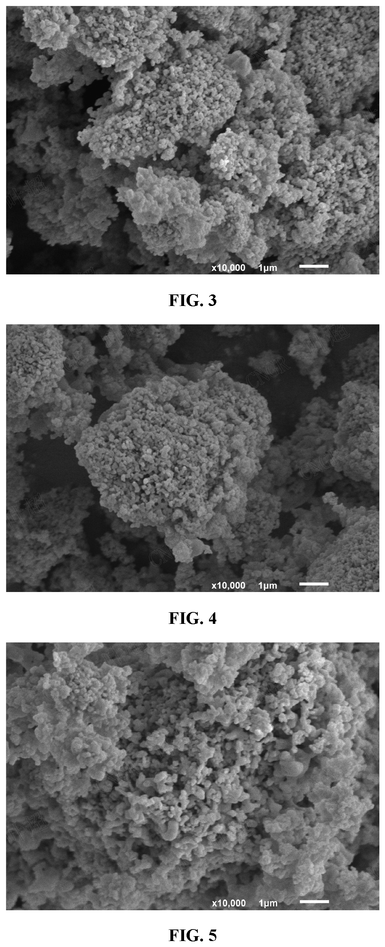

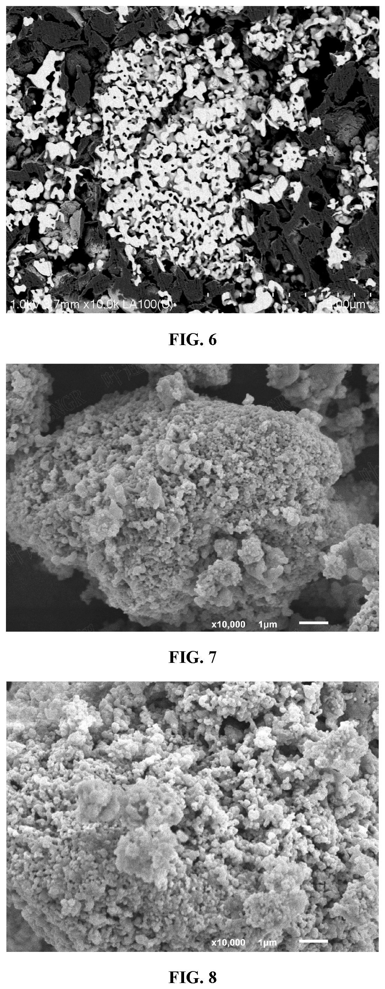

The present comparative example provided a preparation method for an anhydrous iron phosphate. Unlike Example 1, in the aging process of Comparative Example 1, only phosphoric acid was added.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 15% of the molar amount of iron was added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate, as shown in FIG. 5 and FIG. 6.

### Comparative Example 2

The present comparative example provided a preparation method for an anhydrous iron phosphate. Unlike Example 1, in the aging process of Comparative Example 2, the addition amount of ammonium sulfate was different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 15% of the molar amount of iron and ammonium sulfate at 60% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Comparative Example 3

The present comparative example provided a preparation method for an anhydrous iron phosphate. Unlike Example 1, in the aging process of Comparative Example 3, the addition amount of ammonium sulfate was different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 15% of the molar amount of iron and ammonium sulfate at 150% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Comparative Example 4

The present comparative example provided a preparation method for an anhydrous iron phosphate. Unlike Example 1, in the aging process of Comparative Example 4, the addition amount of phosphoric acid was different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a first pressure filtration and rinsing to obtain a first-rinsed material;
Step 7, the first rinsed material was slurried with water in an aging reactor, and phosphoric acid at 5% of the molar amount of iron and ammonium sulfate at 80% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Comparative Example 5

The present comparative example provided a preparation method for an anhydrous iron phosphate. Unlike Example 1, in the aging process of Comparative Example 5, the addition amount of phosphoric acid was different.
Step 1, ferrous sulfate, a byproduct of titanium dioxide, was dissolved in water and heated to 70 °C, then alkali was added to adjust the pH to 5.0 and the resultant was filtered to obtain a solution A;
Step 2, the solution A obtained in Step 1 was diluted with water to obtain a ferrous solution with a concentration of 55 g/L (reaction solution A);
Step 3, phosphate was dissolved in water, then alkali was added to adjust the pH to 6.8 to obtain a solution B;
Step 4, the solution B obtained in Step 3 was diluted with water to a phosphorus concentration of 80 g/L at a temperature of 35 °C to obtain a reaction solution B;
Step 5, the reaction solution A was added to a reactor, then the reaction solution B and hydrogen peroxide were simultaneously added dropwise, and after the addition was complete, aging was continued for 50 min to obtain an amorphous iron phosphate slurry;
Step 6, the amorphous iron phosphate slurry was subjected to a pressure filtration and rinsing to obtain a first-rinsed material;
Step 7, the first rinsed material was slurried with water in an aging reactor, and phosphoric acid at 25% of the molar amount of iron and ammonium sulfate at 120% of the molar amount of iron were added;
Step 8, the material in the aging reactor was stirred uniformly and then heated to 95 - 100 °C, held for a period of time after color changes, followed by pressure filtration and rinsing to obtain a second-rinsed material; and
Step 9, the second-rinsed material was dried to obtain iron phosphate dihydrate, and the iron phosphate dihydrate was subjected to calcination to obtain an anhydrous iron phosphate.

### Test Results

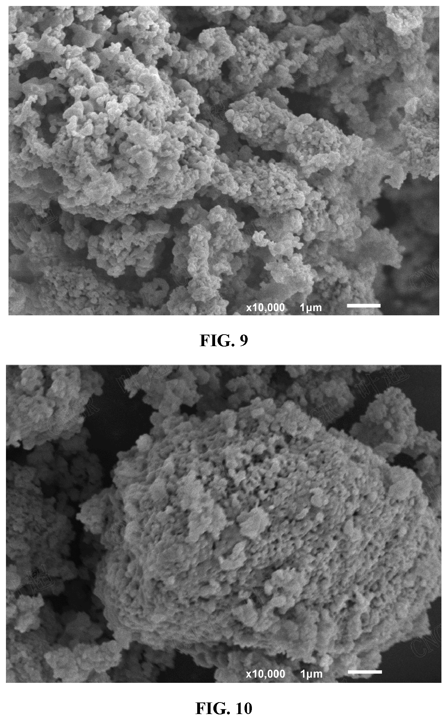

SEM images of the anhydrous iron phosphate prepared in Examples 1-3 are shown in FIGS. 1-4. As can be seen from the SEM images of the cross-section of the anhydrous iron phosphate prepared in Example 1 in FIGS. 1-4, the primary particles of the anhydrous iron phosphate have a small particle size and good consistency. These characteristics are conducive to the grinding of the anhydrous iron phosphate, thereby improving grinding efficiency. It can also be seen from the images that the secondary particles have uniform pore distribution. Under conditions that ensure a certain tap density, high porosity and uniform pore distribution can enhance grinding efficiency. The above characteristics are all conducive to the grinding of the anhydrous iron phosphate and to the improvement of grinding efficiency. SEM images of the anhydrous iron phosphate prepared in Comparative Examples 1-5 are shown in FIGS. 5-10. It can be seen from FIGS. 5-10 that the primary particles of the resulting anhydrous iron phosphate have poor consistency and uneven pore distribution, which is unfavorable for the grinding of the anhydrous iron phosphate, thereby reducing grinding efficiency.

**Table 1 Contents of Phosphoric Acid and Ammonium Sulfate in Examples and Comparative Examples**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Content of Phosphoric Acid | 15% | 20% | 10% | 20% | 10% | 15% | 15% | 15% | 5% | 25% |
| Content of Ammonium Sulfate | 100% | 120% | 80% | 80% | 120% | 0 | 60% | 150% | 80% | 120% |

| | | | | | | | | | | |
|---|---|---|---|---|---|---|---|---|---|---|
| Note: The contents of phosphoric acid and ammonium sulfate are based on the molar amount of iron. | | | | | | | | | | |

**Table 2 Mean particle size and Particle Size Variance of Primary Particles of Anhydrous Iron Phosphate in Examples and Comparative Examples**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Mean particle size of Primary Particles (nm) | 117.83 | 123.87 | 124.34 | 127.93 | 143.21 | 139.64 | 143.12 | 185.80 | 143.08 | 143.12 |
| Particle Size Variance Q of Primary Particles (nm²) | 120.71 | 223.89 | 189.18 | 247.69 | 573.21 | 1205.89 | 1963.02 | 2748.88 | 1923.20 | 1963.02 |
| Consistency of Primary Particles | Superior | Good | Good | Good | Good | Poor | Poor | Inferior | Poor | Poor |

**Table 3 Porosity of Cross-section, Porosity Uniformity Coefficient of Cross-section, Tap Density and Molar Ratio of Fe/P of Anhydrous Iron Phosphate in the Examples and Comparative Examples**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Overall porosity of a cross-section (%) | 25.130 | 25.299 | 24.840 | 25.987 | 26.372 | 36.794 | 33.569 | 14.526 | 31.176 | 23.718 |
| r₁ (%) | 24.543 | 25.930 | 24.193 | 24.397 | 24.153 | 35.572 | 36.838 | 9.381 | 25.919 | 17.079 |
| r₂ (%) | 24.645 | 25.130 | 25.880 | 25.663 | 28.157 | 39.282 | 31.433 | 5.810 | 30.946 | 19.893 |
| r₃ (%) | 25.180 | 24.857 | 24.857 | 24.371 | 25.983 | 34.998 | 35.118 | 8.315 | 32.438 | 23.181 |
| r₄ (%) | 25.552 | 24.798 | 24.098 | 27.257 | 27.231 | 36.800 | 32.320 | 12.095 | 31.049 | 34.103 |
| r₅ (%) | 25.773 | 26.135 | 25.230 | 26.981 | 23.986 | 31.945 | 25.420 | 25.721 | 29.411 | 17.799 |
| Porosity uniformity coefficient of the cross-sectional ( 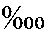 ) | 0.230 | 0.310 | 0.440 | 1.569 | 2.938 | 6.880 | 17.120 | 54.450 | 6.480 | 40.320 |
| Tap density (g/cm³) | 0.65 | 0.66 | 0.65 | 0.64 | 0.62 | 0.57 | 0.59 | 0.66 | 0.61 | 0.59 |
| Molar Ratio of Fe/P | 0.9686 | 0.9660 | 0.9717 | 0.9736 | 0.9660 | 0.9640 | 0.9673 | 0.9684 | 0.9755 | 0.9655 |

As can be seen in Table 1, Table 2, and Table 3, the contents of phosphoric acid and the contents of ammonium sulfate in Examples and Comparative Examples are different. In Example 1, Example 2, and Example 3, the contents of phosphoric acid are within a range of 10% - 20%, and the contents of ammonium sulfate are within a range of 80% - 120%. In Examples 1-3, anhydrous iron phosphate with good primary particle uniformity and a particle size within a range of 100 - 150 nm was successfully prepared, as detailed in Table 2. In addition, the anhydrous iron phosphate in the Examples has a small porosity of cross-section and good pore uniformity, as detailed in Table 3. In comparative Example 1, where ammonium sulfate was not used, the primary particles exhibited a larger particle size and poor consistency. In Comparative Examples 2-5, the contents of phosphoric acid were not within the range of 10% - 20%, or the contents of ammonium sulfate were not within the range of 80% - 120%, resulting in the primary particles having inferior consistency.

The grinding process of the anhydrous iron phosphate in preparation of lithium iron phosphate was as follows: a wet grinding solvent was added to the anhydrous iron phosphate to form an anhydrous iron phosphate slurry. The slurry was then ball-milled using a LonglyChina sand mill (NT-V1L) at a rotation speed of 2200 rpm/min to form an anhydrous iron phosphate slurry. A portion of the slurry was taken at a temperature of 23.5 ± 3 °C to test D10, D50, and D90. Span = (D90 - D10) / D50. D50 values at different grinding durations and span values measured after grinding for 160 min are shown in Table 4 and Table 5 below.

**Table 4: D50 Values (µm) of Anhydrous Iron Phosphate in Examples and Comparative Examples at Different Grinding Durations**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| 0 min | 3.567 | 3.596 | 3.578 | 3.507 | 3.441 | 3.357 | 3.305 | 3.187 | 3.404 | 3.203 |
| 20 min | 0.634 | 0.671 | 0.649 | 0.599 | 0.577 | 0.835 | 0.839 | 0.833 | 0.869 | 0.801 |
| 80 min | 0.375 | 0.408 | 0.387 | 0.427 | 0.396 | 0.451 | 0.537 | 0.507 | 0.477 | 0.493 |
| 100 min | 0.357 | 0.378 | 0.364 | 0.383 | 0.367 | 0.431 | 0.48 | 0.474 | 0.446 | 0.456 |
| 120 min | 0.320 | 0.383 | 0.351 | 0.353 | 0.354 | 0.412 | 0.445 | 0.451 | 0.426 | 0.430 |
| 140min | 0.327 | 0.355 | 0.335 | 0.334 | 0.347 | 0.392 | 0.413 | 0.426 | 0.392 | 0.413 |
| 160min | 0.300 | 0.343 | 0.322 | 0.323 | 0.339 | 0.387 | 0.390 | 0.399 | 0.366 | 0.395 |

**Table 5. Span Values of Anhydrous Iron Phosphate in Examples and Comparative Examples after Grinding for 160 min.**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Span | 0.850 | 0.861 | 0.857 | 0.892 | 0.877 | 0.956 | 0.959 | 1.032 | 0.903 | 0.964 |

As can be seen from Table 4 and Table 5, the anhydrous iron phosphate with the primary particles having good consistency and good pore distribution uniformity in Examples exhibits superior grinding efficiency. The grinding efficiency in Example 1 is twice that of Comparative Example 1, meaning time required to grind to the same particle size is reduced by half. Specifically, a target grinding particle size of the anhydrous iron phosphate is typically any value or a narrower range between 350 - 450 nm (D50). Herein, the anhydrous iron phosphate is ground to approximately 380 nm. In Example 1, grinding to 375 nm takes only 80 min, while in the Comparative Example, grinding to 387 nm takes 160 min. In addition, a comparison can be made from another aspect: after grinding the anhydrous iron phosphate in Examples and Comparative Examples for 80 min, respectively, reduction in D50 before and after grinding is compared (the reduction is calculated as the D50 after 0 min of grinding minus the D50 after 80 min of grinding). Reductions in D50 of the anhydrous iron phosphate in Examples 1-5 are 3.192, 3.188, 3.191, 3.080, and 3.045, respectively. Reductions in D50 of the anhydrous iron phosphate in Comparative Examples 1-5 are 2.906, 2.768, 2.680, 2.927, and 2.710, respectively. The data clearly show that, under the same grinding time, the reduction in D50 of the anhydrous iron phosphate in the Examples (the primary particles have good consistency and the secondary particles have more uniform porosity) is greater than those in Comparative Examples, thus possessing higher grinding efficiency. Compared to Examples 1-3, the secondary particles of the anhydrous iron phosphate in Example 4 have inferior pore uniformity and a smaller reduction in D50, resulting in lower grinding efficiency. Compared to Example 4, the primary particles have inferior consistency and the secondary particles have lower pore uniformity of the anhydrous iron phosphate in Example 5, and reduction in D50 is smaller than that of Example 4, leading to lower grinding efficiency. Details are shown in Table 4.

Because the D50 measured after 140 min of grinding in Example 1 is 7 nm larger than the D50 measured after 120 min of grinding, the D50 measured after 140 min is considered abnormal data and is neither used for result analysis nor as a reference.

Grinding for the same time, the anhydrous iron phosphate with the primary particles having good consistency and pore distribution uniformity has a smaller D50 and a narrower span value. Details are shown in Table 5.

Anhydrous iron phosphate with the primary particles having better consistency and pore distribution uniformity can also reduce energy consumption and save costs in the grinding process.

The above are merely preferred embodiments of the present invention and are not intended to limit the scope of the present invention. Various modifications and variations can be made to the present invention by those skilled in the art. Any amendments, equivalent replacements, improvements, etc., made within the spirit and principles of the present invention shall fall within the scope of protection of the present invention.

### INDUSTRIAL APPLICABILITY

In summary, the present invention provides an anhydrous iron phosphate and a preparation method therefor. The anhydrous iron phosphate provided includes secondary particles formed by aggregation of a plurality of primary nanoparticles, wherein the average particle size of the primary particles forming the secondary particles is 100 - 150 nm, and the particle size variance Q is less than or equal to 1000 nm². The anhydrous iron phosphate is characterized by primary particles with a small particle size and good consistency. Grinding the anhydrous iron phosphate having the above characteristics can achieve high grinding efficiency, save energy, increase production capacity, and reduce costs, making it more conducive to application in preparation of lithium iron phosphate.

## Claims

1. An anhydrous iron phosphate, **characterized in that** the anhydrous iron phosphate comprises secondary particles formed by aggregation of a plurality of primary nanoparticles, an average particle size of the primary particles forming the secondary particles is 100 - 150 nm, and a particle size variance Q is less than or equal to 1000 nm².

2. The anhydrous iron phosphate according to claim 1, **characterized in that** the average particle size of the primary particles forming the secondary particles is 110 - 130 nm, and/or, the particle size variance Q is less than or equal to 300 nm².

3. The anhydrous iron phosphate according to claim 1, **characterized in that** an overall porosity of a cross-section of the secondary particles is 10% - 30%, and a porosity uniformity coefficient R of the cross-section is less than or equal to 5 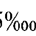 ; and
preferably, the overall porosity of the cross-section of the secondary particles is 20% - 30%, and/or, the porosity uniformity coefficient R of the cross-section is less than or equal to 2 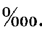 .

4. The anhydrous iron phosphate according to claim 1, **characterized in that** the anhydrous iron phosphate satisfies one or more of following conditions A to C:
A. a molar ratio of Fe/P in the anhydrous iron phosphate is 0.96 - 0.98;
B. a specific surface area BET of the anhydrous iron phosphate is 10 - 14 m²/g; and
C. a tap density TD of the anhydrous iron phosphate is 0.6 - 0.8 g/cm³.

5. A preparation method for an anhydrous iron phosphate, **characterized by** comprising: mixing an amorphous iron phosphate solution with a phosphoric acid and an ammonium salt to obtain a mixed material, heating the mixed material, then allowing it to stand while maintaining the temperature, followed by washing, drying, and calcining to obtain an anhydrous ferric phosphate.

6. The preparation method according to claim 5, **characterized in that** an amount of phosphoric acid in the mixed material is 10% - 20% of a molar amount of iron, and an amount of ammonium salt is 80% - 120% of the molar amount of iron.

7. The preparation method according to claim 5, **characterized by** comprising following steps:
adding a phosphate solution containing hydrogen peroxide dropwise to a ferrous salt solution to obtain an amorphous iron phosphate slurry; then subjecting the amorphous iron phosphate slurry to a first pressure filtration and rinsing to obtain a first-rinsed material;
adding water to the first-rinsed material to form a slurry, and adding the phosphoric acid and the ammonium salt to obtain the mixed material; then heating the mixed material, holding the temperature and standing, followed by subjecting to a second pressure filtration and rinsing to obtain a second-rinsed material; and
drying and calcining the second-rinsed material to obtain the anhydrous iron phosphate;
preferably, the ammonium salt comprises one or more selected from the group consisting of ammonium sulfate, ammonium phosphate, ammonium dihydrogen phosphate, and diammonium hydrogen phosphate;
preferably, heating the mixed material to 95 - 100 °C after uniform stirring, wherein a duration of holding the temperature is 10 - 150 min; and
preferably, drying the second-rinsed material at 100 - 200 °C, followed by calcining at 550 - 800 °C for 4 - 8 h to obtain the anhydrous iron phosphate.

8. The preparation method according to claim 5, **characterized in that** a preparation method for the amorphous iron phosphate slurry comprises: adding a ferrous salt solution to a reactor, then simultaneously adding the phosphate solution and the hydrogen peroxide dropwise, and continuing aging after the dropwise addition is completed to obtain the amorphous iron phosphate slurry;
preferably, a preparation method for the ferrous salt solution comprises: dissolving ferrous sulfate, a byproduct of titanium dioxide, in water, heating to 60 - 80 °C, then adding an alkali to adjust the pH to 4.0 - 5.5, filtering to remove impurities and precipitates, collecting a filtrate and diluting with water to obtain a ferrous salt solution with a concentration of 30 - 80 g/L; and
preferably, a preparation method for the phosphate solution comprises: dissolving a phosphate in water, adding an alkali to adjust the pH to 6.0 - 8.0, and then diluting with water at a temperature of 30 - 50 °C to a phosphate radical concentration of 60 - 100 g/L to obtain the phosphate solution.

9. A lithium iron phosphate positive electrode material, **characterized in that** the lithium iron phosphate positive electrode material is prepared by a raw material containing an anhydrous iron phosphate, wherein the anhydrous iron phosphate is the anhydrous iron phosphate according to any one of claims 1 to 4, or the anhydrous iron phosphate prepared by the preparation method according to any one of claims 5 to 8.

10. A lithium-ion battery, **characterized in that** the lithium-ion battery comprises a positive electrode prepared by the lithium iron phosphate positive electrode material according to claim 9, a negative electrode, a separator, and an electrolyte.
